# EUROPEAN PATENT SPECIFICATION

(11) **EP 1 765 958 B1**
(45) Date of publication and mention of the grant of the patent: **15.04.2009**
(21) Application number: 05750608.1
(22) Date of filing: 18.05.2005
(51) Int. Cl.: C10G 9/20

(54) **APPARATUS AND PROCESS FOR CONTROLLING TEMPERATURE OF HEATED FEED DIRECTED TO A FLASH DRUM WHOSE OVERHEAD PROVIDES FEED FOR CRACKING**
VERFAHREN UND VORRICHTUNG ZUR STEUERUNG DER TEMPERATUR EINES ERHITZTEN EINSATZSTOFFS FÜR EINE FLASHTROMMEL, DEREN ÜBERKOPFPRODUKT EINSATZSTOFF FÜR DAS CRACKEN LIEFERT
APPAREIL ET PROCEDE POUR REGULER LA TEMPERATURE D'UNE ALIMENTATION CHAUFFEE VERS UN BALLON DE DETENTE DONT LA TETE FOURNIT UNE ALIMENTATION POUR LE CRAQUAGE

(30) Priority: 21.05.2004 US 851546; 21.05.2004 US 851486; 21.05.2004 US 851878; 21.05.2004 US 851494; 21.05.2004 US 851487; 21.05.2004 US 851434; 21.05.2004 US 851495; 21.05.2004 US 851730; 21.05.2004 US 851500; 21.05.2004 US 573474 P; 14.07.2004 US 891981; 14.07.2004 US 891795; 16.07.2004 US 893716; 28.10.2004 US 975703; 10.12.2004 US 9661
(43) Date of publication of application: 28.03.2007
(73) Proprietor: ExxonMobil Chemical Patents Inc., Baytown, TX 77520-2101 (US)
(72) Inventor: STELL, Richard, C., Houston, TX 77062 (US); MCCOY, James, N., Houston, TX 77023 (US)
(74) Representative: Gerstberger, Gisela
(86) International application number: PCT/US2005/017482
(87) International publication number: WO 2005/113713

(56) References cited:
- US-A- 4 361 478
- US-A- 5 580 443
- US-A1- 2004 004 022
- US-B1- 6 632 351

## Description

### FIELD OF THE INVENTION

The present invention relates to the cracking of hydrocarbons that contain relatively non-volatile hydrocarbons and other contaminants. More particularly, the present invention relates to controlling the temperature of a heated feed directed to a flash drum whose overhead is subsequently cracked, permitting the use of a variety of feeds.

### BACKGROUND OF THE INVENTION

Steam cracking, also referred to as pyrolysis, has long been used to crack various hydrocarbon feedstocks into olefins, preferably light olefins such as ethylene, propylene, and butenes. Conventional steam cracking utilizes a pyrolysis furnace that has two main sections: a convection section and a radiant section. The hydrocarbon feedstock typically enters the convection section of the furnace as a liquid (except for light or low molecular weight feedstocks which enter as a vapor) wherein it is typically heated and vaporized by indirect contact with hot flue gas from the radiant section and by direct contact with steam. The vaporized feedstock and steam mixture is then introduced into the radiant section where the cracking takes place. The resulting products including olefins leave the pyrolysis furnace for further downstream processing, including quenching.

Pyrolysis involves heating the feedstock sufficiently to cause thermal decomposition of the larger molecules. The pyrolysis process, however, produces molecules that tend to combine to form high molecular weight materials known as tar. Tar is a high-boiling point, viscous, reactive material that can foul equipment under certain conditions. In general, feedstocks containing higher boiling materials tend to produce greater quantities of tar.

The formation of tar after the pyrolysis effluent leaves the steam cracking furnace can be minimized by rapidly reducing the temperature of the effluent exiting the pyrolysis unit to a level at which the tar-forming reactions are greatly slowed. This cooling, achieved in one or more steps and using one or more methods, is referred to as quenching.

Conventional steam cracking systems have been effective for cracking high-quality feedstock which contains a large fraction of light volatile hydrocarbons, such as gas oil and naphtha. However, steam cracking economics sometimes favor cracking lower cost heavy feedstocks such as, by way of non-limiting examples, crude oil condensates and atmospheric residue, e.g., atmospheric pipestill bottoms. Crude oil, atmospheric residue and, to a lesser extent, condensate often contain high molecular weight, non-volatile components with boiling points in excess of about 590°C (1100°F) otherwise known as resids. The non-volatile components of these feedstocks lay down as coke in the convection section of conventional pyrolysis furnaces. Only very low levels of non-volatile components can be tolerated in the convection section downstream of the point where the lighter components have fully vaporized.

In most commercial naphtha and gas oil crackers, cooling of the effluent from the cracking furnace is normally achieved using a system of transfer line heat exchangers, a primary fractionator, and a water quench tower or indirect condenser. The steam generated in transfer line exchangers can be used to drive large steam turbines which power the major compressors used elsewhere in the ethylene production unit. To obtain high energy-efficiency and power production in the steam turbines, it is necessary to superheat the steam produced in the transfer line exchangers.

Cracking heavier feeds, such as kerosenes and gas oils, produces large amounts of tar, which lead to moderate coking in the radiant section of the furnace as well as rapid fouling in the transfer line exchangers preferred in lighter liquid cracking service.

Additionally, during transport some naphthas and condensates are contaminated with heavy crude oil containing non-volatile components. Conventional pyrolysis furnaces do not have the flexibility to process residues, crudes, or many residue- or crude-contaminated gas oils or naphthas and condensates which are contaminated with non-volatile components.

To address coking problems, U.S. Patent 3,617,493, which is incorporated herein by reference, discloses the use of an external vaporization drum for the crude oil feed and discloses the use of a first flash to remove naphtha as vapor and a second flash to remove vapors with a boiling point between 230 and 590°C (450 and 1.100°F). The vapors are cracked in the pyrolysis furnace into olefins and the separated liquids from the two flash tanks are removed, stripped with steam, and used as fuel.

U.S. Patent 3,718,709, which is incorporated herein by reference, discloses a process to minimize coke deposition. It describes preheating of heavy feedstock inside or outside a pyrolysis furnace to vaporize about 50% of the heavy feedstock with superheated steam and the removal of the residual; separated liquid. The vaporized hydrocarbons, which contain mostly light volatile hydrocarbons, are subjected to cracking. Periodic regeneration above pyrolysis temperature is effected with air and steam.

U.S. Patent 5,190,634, which is incorporated herein by reference, discloses a process for inhibiting coke formation in a furnace by preheating the feedstock in the presence of a small, critical amount of hydrogen in the convection section. The presence of hydrogen in the convection section inhibits the polymerization reaction of the hydrocarbons thereby inhibiting coke formation.

U.S. Patent 5,580,443, which is incorporated herein by reference, discloses a process wherein the feedstock is first preheated and then withdrawn from a preheater in the convection section of the pyrolysis furnace. This preheated feedstock is then mixed with a predetermined amount of steam (the dilution steam) and is then introduced into a gas-liquid separator to separate and remove a required proportion of the non-volatiles as liquid from the separator. The separated vapor from the gas-liquid separator is returned to the pyrolysis furnace for heating and cracking.

Co-pending U.S. Application Serial No. 10/188,461 filed July 3, 2002, Patent Application Publication US 2004/0004022 A1, published January 8, 2004, which is incorporated herein by reference, describes an advantageously controlled process to optimize the cracking of volatile hydrocarbons contained in the heavy hydrocarbon feedstocks and to reduce and avoid coking problems. It provides a method to maintain a relatively constant ratio of vapor to liquid leaving the flash by maintaining a relatively constant temperature of the stream entering the flash. More specifically, the constant temperature of the flash stream is maintained by automatically adjusting the amount of a fluid stream mixed with the heavy hydrocarbon feedstock prior to the flash. The fluid can be water.

It would be advantageous to provide an apparatus and process for cracking hydrocarbons in which a wide variety of feeds could be employed. Inasmuch as controlling the temperature of the stream entering the flash has been found to be desirable for heavy feedstocks, controlling such temperature over a wider range would be additionally advantageous for utilizing feedstocks of various boiling point ranges. At times, condensates obtained from gas fields and typically boiling in the range of from about 38 to about 315°C (100 to 600°F) are economically attractive as cracking feeds. Such condensates are typically transported most efficiently on ships that usually carry crude. However, crude from previous cargos can contaminate the condensate with resid. When processed in conventional steam cracking equipment, all of the condensate and the non-volatile fraction of the crude oil contaminant will boil before reaching the flash drum used to remove the resid. As a result, the non-volatile fraction will lay down in upper convection tubes of a furnace as coke. Inasmuch as conventional steam/air decoking procedures are typically too cool to burn this coke present in the upper convection tubes, mechanical cleaning of the tubes is necessary at great expense; Although this problem might be avoided by cleaning the hold of a crude carrier to remove resids, this solution is also expensive. Accordingly, it would be desirable to provide an apparatus and process for cracking feeds, including feeds that contain resids, which provide sufficient operating flexibility to prevent coke laydown associated with high flash drum operating temperatures.

### SUMMARY OF THE INVENTION

In one aspect, the present invention relates to an apparatus for cracking hydrocarbonaceous feed, which comprises a vapor/liquid separator and I) a convection zone containing (a) a first tube bank comprising (i) an upper hydrocarbon feed inlet, (ii) an optional lower hydrocarbon feed inlet, (iii) one or more inlets for introducing water and steam, and (iv) an outlet for a heated mixture stream; further comprising (b) (i) a second tube bank positioned beneath the first tube bank comprising an economizer inlet for introducing high pressure boiler feed water and an economizer outlet for withdrawing boiler feed water of greater heat content and (ii) an optional third tube bank positioned beneath the first tube bank comprising an inlet for high pressure steam which is heated in a section of the third tube bank, an inlet for mixing desuperheater water with the high pressure steam to cool the high pressure steam, a section for reheating the high pressure steam, and an outlet for withdrawing superheated high pressure steam; and (c) further comprising (i) a bypass line for receiving the heated mixture stream from the first tube bank and (ii) a fourth tube bank positioned beneath the second tube bank and the third tube bank which comprises an inlet connected to the bypass line and an outlet for directing effluent to a vapor/liquid separator; and (d) a fifth tube bank positioned beneath the fourth tube bank with an inlet for receiving overhead from the vapor/liquid separator and an outlet; and II) a radiant zone beneath the convection zone which includes a plurality of burners producing flue gas passing upwards through the radiant zone and convection tube banks, which radiant zone receives effluent from the fifth tube bank and further comprises an outlet for removing cracked effluent.

In another aspect, the present invention relates to a process for cracking hydrocarbonaceous feed that comprises (a) preheating the feed in a first tube bank of a convection zone of a furnace, the feed being introduced to the first tube bank through at least one of (i) an upper hydrocarbon feed inlet and (ii) a lower hydrocarbon feed inlet; (b) mixing the hydrocarbon feedstock with water and steam added to the first tube bank via one or more inlets for introducing water and steam and removing the heated mixture stream through an outlet in the first tube bank, the water and steam being added in respective amounts which control the temperature of the heated mixture stream; (c) further controlling the temperature of the heated mixture stream by (i) regulating the temperature of a second tube bank of the convection zone positioned beneath the first tube bank by introducing high pressure boiler feed water through an economizer inlet and withdrawing boiler, feed water of greater heat content through an economizer outlet and (ii) optionally, regulating the temperature on a third tube bank of the convection zone positioned beneath the first tube bank by introducing high pressure steam through an inlet for high pressure steam, heating the high pressure steam, mixing desuperheater water with the high pressure steam to cool the high pressure steam, reheating the high pressure steam, and withdrawing superheated high pressure steam from the third tube bank through an outlet; (d) directing the heated mixture stream by a bypass line substantially external to the convection zone for receiving the heated mixture stream from the first tube bank to a fourth tube bank positioned beneath the second tube bank and the third tube bank, which fourth tube bank comprises an inlet connected to the bypass line and an outlet for directing a partially liquid effluent to a vapor/liquid separator; (e) flashing the effluent from the fourth tube bank effluent in the vapor/liquid separator external to the convection zone to provide a liquid bottoms phase and an overhead vapor phase; (f) directing the overhead vapor phase to a fifth tube bank of the convection zone positioned beneath the fourth tube with an inlet for receiving overhead from the vapor/liquid separator and an outlet in order to further heat the overhead vapor phase; (g) cracking the further heated overhead vapor phase in a radiant zone beneath the convection zone, said radiant zone including a plurality of burners producing flue gas passing upwards through the radiant zone and convection tube banks, to provide a cracked effluent; and (h) withdrawing the cracked effluent from the radiant zone.

### BRIEF DESCRIPTION OF THE DRAWINGS

Figure 1 illustrates a schematic flow diagram of the overall process and apparatus in accordance with the present invention wherein a variety of feeds are introduced through a single feed inlet.

Figure 2 illustrates a schematic flow diagram of the overall process and apparatus in accordance with the present invention wherein a variety of feeds are introduced through a plurality of feed-specific inlets with an optional heater bypass used for condensate feeds requiring less heating before flashing.

### DETAILED DESCRIPTION OF THE INVENTION

Unless otherwise stated, all percentages, parts, ratios, etc., are by weight. Ordinarily, a reference to a compound or component includes the compound or component by itself, as well as in combination with other compounds or components, such as mixtures of compounds.

Further, when an amount, concentration, or other value or parameter is given as a list of upper preferable values and lower preferable values, this is to be understood as specifically disclosing all ranges formed from any pair of an upper preferred value and a lower preferred value, regardless of whether ranges are separately disclosed.

As used herein, resids are non-volatile components, e.g., the fraction of the hydrocarbon feed with a nominal boiling point above 590°C (1100°F) as measured by ASTM D-6352-98 or D-2887. This invention works very well with non-volatiles having a nominal boiling point above 760°C (1400°F). The boiling point distribution of the hydrocarbon feed is measured by Gas Chromatograph Distillation (GCD) by ASTM D-6352-98 or D-2887 extended by extrapolation for materials boiling above 700°C (1292°F). Non-volatiles include coke precursors, which are large, condensable molecules that condense in the vapor and then form coke under the operating conditions encountered in the present process of the invention.

Such feedstock could comprise, by way of non-limiting examples, one or more of steam cracked gas oil and residues, gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, atmospheric pipestill bottoms, vacuum pipestill streams including bottoms, wide boiling range naphtha to gas oil condensates, heavy non-virgin hydrocarbon streams from refineries, vacuum gas oils, heavy gas oil, naphtha contaminated with crude, atmospheric residue, heavy residue, hydrocarbon gas/residue admixtures, hydrogen/residue admixtures, C₄'s/residue admixtures, naphtha/residue admixtures, gas oil/residue admixtures, and crude oil; especially crudes, atmospheric resids, contaminated condensates, and contaminated naphthas.

The present invention relates to an apparatus or process for cracking hydrocarbonaceous feed, wherein the temperature of heated effluent directed to a vapor/liquid separator, such as a flash drum, whose overhead is subsequently cracked, can be controlled within a range sufficient so the heated effluent is partially liquid, say, from about 260 to about 540°C (500 to 1000°F). This permits processing of a variety of feeds with differing volatility, such as atmospheric resid (at higher temperature) and dirty condensates, such as crude- or fuel oil-contaminated condensates (at lower temperature). For example, a very light crude such as Tapis has a moderate amount of resid, yet might need to enter the convection section at the lower inlet because, like condensates, it contains a lot of low molecular weight light hydrocarbons. These lights combine with steam/vaporized water to vaporize all but the non-volatile heavies at a low temperature. As long as some non-volatile resid is present, this temperature does riot change much with resid concentration. The temperature can be lowered as needed by (i) providing one or more additional downstream feed inlets to a convection section, (ii) increasing the ratio of water/steam mixture added to the hydrocarbonaceous feed, (iii) using a high pressure boiler feed water economizer to remove heat, (iv) superheating high pressure steam to remove heat, (v) by passing an intermediate portion of the convection section used, e.g., preheat rows of tube banks, as described above, and/or (vi) reducing excess oxygen content of the flue gas providing convection heat. A radiant zone beneath the convection section includes a burner producing flue gas passing upward through the tube banks. Typically, a plurality of burners is used which is sufficient to provide uniform flue gas heat release in the radiant zone, e.g., 10, 20, or even 50 or more burners.

In an embodiment of the present invention, the radiant zone includes a means for adjusting excess oxygen content of the flue gas, which provides temperature control for the convection section. A sample of flue gas exiting the radiant section of the furnace is cooled and analyzed for oxygen. The flue gas oxygen can be controlled as a function of analyzed oxygen content by adjusting dampers at the burner's air ducts, adjusting the dampers/louvers located either below or above the stack induced draft fan, and by adjusting the induced draft fan speed. Since flue gas analysis takes a relatively long time, the furnace draft, i.e., the difference in pressure between the top of the radiant section and the outside air, a rapidly responding parameter, is advantageously used to control the damper, louver and fan speed adjustments.

One embodiment of the present invention comprises a line which bypasses at least a portion of the fourth tube bank and whose effluent is directed to the vapor/liquid separator.

An embodiment of the present invention comprises a first transfer line exchanger for receiving, cracked effluent from the radiant zone, the transfer line exchanger having an outlet for removing quenched effluent. A second transfer line exchanger can be placed downstream from the first transfer line exchanger to provide additional effluent quenching. A recovery train is placed downstream of the transfer line exchanger.

In one embodiment, the one or more inlets for introducing water and steam are associated with a sparger for mixing the water, the steam, and the feedstock.

In an embodiment, the upper inlet is used for introducing feeds selected from the group consisting of crude oil, atmospheric resids, and condensates which contain at least about 2 ppm by weight [ppm(w)] resids.

In one embodiment, the feeds to the upper inlet are selected from the group consisting of crude oil and atmospheric resids.

In one embodiment, the lower inlet is used for introducing feeds that contain at least about 2 ppm(w) resids. Typically, such feeds are condensates that contain at least about 350 ppm(w) resids. Where such feeds are employed, their temperature prior to introduction to the vapor/liquid separator can be provided at a lower temperature as needed by adjusting excess oxygen content of the flue gas. The excess oxygen content can be adjusted to at least about 4%, particularly for the less volatile heavy feeds. For more volatile lighter feeds, excess oxygen content is preferably adjusted to no greater than about 3%, say, to no greater than about 1.5%.

In an embodiment, the process of the invention further comprises bypassing at least a portion of the fourth tube bank and directing effluent taken from an intermediate portion of the fourth tube bank to the vapor/liquid separator.

In an embodiment where a second transfer line exchanger further quenches the quenched cracked effluent from a first transfer line exchanger, the olefins from the further quenched cracked effluent are recovered in a recovery train.

In one embodiment of the process, the hydrocarbonaceous feed containing resid is selected from light crude oil and condensate contaminated with resids in the effluent from the fourth tube bank directed to the vapor/liquid separator is maintained at temperatures less than about 315°C (600°F). Typically, the temperatures of the fourth tube bank effluent are less than about 290°C (550°F).

In an embodiment of the process of the invention, the hydrocarbonaceous feed containing resid is selected from the group consisting of crude oil and atmospheric resid (e.g., atmospheric pipestill bottoms) in the effluent from the fourth tube bank is directed to the vapor/liquid separator is maintained at temperatures of at least about 400°C (750°F), say, at least about 460°C (860°F), e.g., ranging from about 400 to about 540°C (750 to 1000°F).

In one embodiment of the process, the feed is introduced to the first tube bank through the upper hydrocarbon feed inlet.

In an embodiment, the feed is introduced to the first tube bank through the lower hydrocarbon feed inlet. Typically, the feed contains at least about 2 ppm(w) resid.

In another embodiment of the process, the feed is introduced to the first tube bank through both (i) an upper hydrocarbon feed inlet and (ii) a lower hydrocarbon feed inlet. The feed can be selected from the group consisting of crude oil and atmospheric resid.

In an embodiment of the process, a feed that contains less than about 50 wt.% resid is introduced to the first tube bank through the upper hydrocarbon feed inlet. The feed can be selected from the group consisting of crude oil, atmospheric resid, and heavy or contaminated condensate.

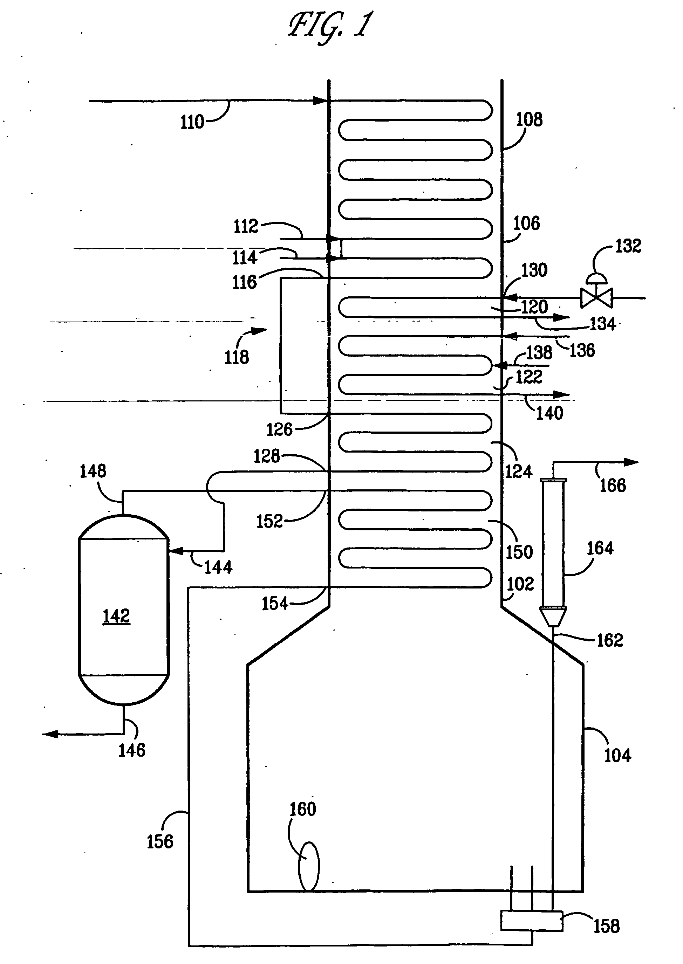

Figure 1 depicts an apparatus for cracking hydrocarbonaceous feeds selected from disparate sources, including crudes, atmospheric resids, and condensates, wherein all feeds enter through the same inlet. The apparatus comprises a furnace **102** comprising a radiant section **104** and a convection section **106** comprising a convection zone containing a first tube bank **108** comprising an upper hydrocarbon feed inlet **110,** inlet for introducing water **112,** and inlet for introducing steam **114,** e.g., via a dual sparger, the respective amounts of water and steam controlling temperature in the apparatus, to a limited extent. By swapping water for steam up to about 9 MW of heat is absorbed, reducing the temperature in flash drum **142** by about 55 to about 110°C (100 to 200°F). An outlet **116** is provided for a heated mixture stream from the first tube bank **108** and feeds into a process jumpover or bypass line **118** which bypasses a second tube bank **120** and a third tube bank **122** to a fourth tube bank **124** positioned below the second and third tube banks through fourth tube bank inlet **126** and the heated stream passes through fourth tube bank outlet **128.** A separate second tube bank **120** is an economizer whose economizer inlet **130** is controlled by valve **132** for introducing high pressure boiler feed water added at a temperature of about 110°C (230°F), further heated within the furnace **102** to a temperature of up to about 310°C (590°F) and removed as boiler feed water of greater heat content via economizer outlet **134** and directed to a steam drum/boiler. When crudes and atmospheric resid feeds (with relatively low volatility) are cracked, less or no-high pressure boiler feed water flows through the economizer. This maximizes flue gas temperature above the economizer. When high volatility feeds are cracked, e.g., dirty condensates and dirty naphthas, more high pressure boiler feed water flows through the economizer, producing cooler flue gas and relatively cool condensate above the economizer. The economizer can absorb roughly an additional 9 MW. The economizer allows energy efficient furnace operation no matter which feed is cracked. For example, because some liquid must be present in the mixture entering the separator drum, its temperature is lower for dirty condensates than for crudes or atmospheric resids. The lower temperature provides a lower crossover temperature and a greater radiant heat requirement or furnace firing per unit of condensate than crude or atmospheric resid. At constant maximum firing, the condensate feed rate to the radiant zone is about 10 to about 20% less than for the heavier feeds, resulting in excess heat entering the convection zone. But the greater flow of high pressure boiler feed water in the economizer absorbs the extra heat entering the convection section, which is in turn converted to additional valuable high pressure steam in the steam drum. Thus, compared to a conventional furnace, during condensate operations, less feed is cracked, but more high pressure steam is produced. The separate third tube bank **122** is positioned beneath the first tube bank and comprises an inlet **136** for high pressure steam, an inlet **138** for mixing desuperheater water with said high pressure steam and reheating said high pressure steam, and an outlet **140** for withdrawing superheated high pressure steam. Saturated steam, typically at 10,500 kPa and 315°C (1500 psig and 600°F) is fed from the steam drum at the top of the furnace to a bank of convection tubes which heat the steam to about 482°C (900°F). Then, just exterior to the convection section, high pressure boiler feed water is added to the high pressure steam through a combined control valve atomizer assembly called the desuperheater. The steam is quenched to about 315°C (600°F) and is subsequently reheated to about 510°C (950°F). This 510°C (950°F) outlet temperature is controlled by the quantity of the high pressure water added through the desuperheater. The intermediate steam quenching by the desuperheater allows the use of less expensive convection tube alloys and produces more high pressure steam than other ways of controlling the outlet temperature.

Inasmuch as it is important that the feed to the liquid/vapor separation apparatus or flash drum **142** be at least partially liquid, the temperature of the heated mixture stream exiting from fourth tube bank outlet **128** is advantageously maintained at a temperature to effect this, say, less than about 290°C (550°F) for condensates. At 290°C the resid, a fraction of the remaining crude oil contaminant, and a small fraction of the condensate comprise the liquid phase. For feeds such as crudes and atmospheric resids, where less or no heat is removed by the economizer or by vaporized sparger water, the temperature of the feed entering the flash drum can be at least about 400°C (750°F), preferably at least about 425°C (800°F). At this temperature, most but not all of the crude or atmospheric resid is in the vapor phase.

The heated mixture stream from fourth tube bank outlet **128** is directed to flash drum (or knockout drum) **142** through flash drum inlet **144** which can be substantially tangential to the drum wall to effect swirling. Liquid hydrocarbon resid is remove through bottoms outlet **146** and a vaporous overhead, e.g., a clean steam/hydrocarbon vapor, is removed through overhead outlet **148.** The vaporous overhead then passes to fifth tube bank **150**, positioned beneath the fourth tube bank, via inlet **152** for further heating and is removed via outlet **154** through crossover line **156** and manifold **158** to radiant zone **104** which includes burners **160** producing flue gas passing upwards through the radiant zone and convection tube banks.

The amount of excess oxygen in the flue gas can be controlled, providing yet an additional means to broaden the temperature range used in the process. When cracking low volatility feeds, the furnace can be operated with relatively high excess oxygen in the flue gas, say, from about 4 to about 6%. But when cracking high volatility feeds, the excess oxygen can be reduced below about 4%, such as 2% or even lower. This reduces heat to the convection section by about 3 MW to about 9 MW.

The effluent from the fifth tube bank outlet is cracked in the radiant zone and cracked effluent is removed through outlet **162.** The cracked effluent can pass from outlet **162** to one or more transfer line exchangers **164** and thence to a recovery train via line **166.** The cracking of certain feeds such as condensates can result in low flash drum and crossover temperatures which tend to require addition of more heat by the radiant zone where cracking occurs, e.g., condensate . typically requires about 85°C (150°F) additional heating and thus effects higher tube metal temperatures and excessive coking in the radiant zone. These conditions can be ameliorated by increasing the length of the coil (or tube) employed in the radiant zone, say, from about 2 to about 20 %, e.g., about 10%, for example, extending a radiant coil from about 12 m to about 13 m (40 to 44 feet), which results in a slightly lower selectivity for crude or atmospheric resids cracking, but longer run lengths for all feeds.

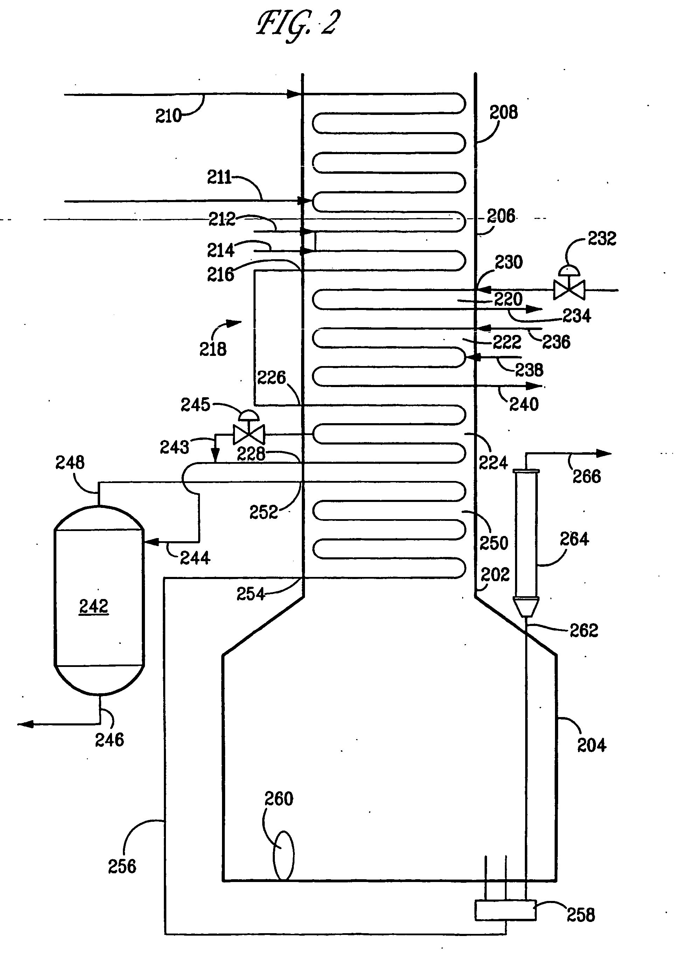

Figure 2 depicts an apparatus for cracking hydrocarbonaceous feeds selected from disparate sources, including crudes, atmospheric resids and condensates. Feeds such as crudes and atmospheric resids requiring more heating enter through an upper inlet while feeds such as dirty condensates, naphthas, and kerosenes requiring less heating are added downstream in a lower inlet and are exposed to less convection heat transfer area.

The apparatus comprises a furnace **202** comprising a radiant section **204** and a convection section **206** comprising a convection zone containing a first tube bank **208** comprising an upper hydrocarbon feed inlet **210,** for introducing feeds such as crudes and atmospheric resids, a lower hydrocarbon feed inlet **211** for introducing feeds such as dirty condensates, an inlet for introducing dilution water **212,** and an inlet for introducing dilution steam **214,** the respective amounts of dilution water and steam controlling temperature to an extent in the apparatus. An outlet **216** is provided for a heated mixture stream from the first tube bank **208** and feeds into a process jumpover or bypass line **218** which bypasses a second tube bank **220** and a third tube bank **222** to a fourth tube bank **224** positioned below the second and third tube banks through fourth tube bank inlet 226 and the heated stream passes via fourth tube bank outlet **228.**

A separate second tube bank **220** is an economizer whose economizer inlet **230 is** controlled by valve **232** for introducing high pressure boiler feed water added at a temperature of about 110°C (230°F), heated within the second tube bank **220** to a temperature of up to about 310°C (590°F) and is removed as high pressure boiler feed water of greater heat content via economizer outlet **234** for further treatment, say, by a steam drum/boiler.

The separate third tube bank **222** is positioned beneath the first tube bank and comprises an inlet **236** for high pressure steam, an inlet **238** for mixing desuperheater water with said high pressure steam, reheating of said high pressure steam, and an outlet **240** for withdrawing superheated high pressure steam.

In as much as it is important that the feed to the liquid/vapor separation apparatus or flash drum **242** be at least partially liquid, the temperature of the heated mixture stream exiting from fourth tube bank outlet **228** is typically maintained at a temperature to effect this. The heated mixture stream from fourth tube bank outlet **228** is directed to flash drum (or knockout drum) **242** through flash drum inlet **244**. One way of reducing the temperature of the heated mixture stream directed to the flash drum is to provide a bypass line **243** around a portion of the fourth tube bank outlet **228** to the flash drum inlet **244.** The bypass line **243** is controlled by valve **245** and is especially suited for feeds such as dirty condensates introduced at lower temperatures. Hydrocarbon resid is removed through bottoms outlet **246** and vaporous overhead through overhead outlet **248.** The vaporous overhead then passes to fifth tube bank **250,** positioned beneath the fourth tube bank, via inlet **252** for further heating and is removed via outlet **254** through crossover line **256** and manifold **258** to radiant zone **204,** which includes burners **260** producing flue gas passing upwards through the radiant zone and convection tube banks. The amount of excess oxygen in the flue gas can be controlled. The effluent from the fifth tube bank outlet is cracked in the radiant zone and cracked effluent is removed through outlet **262.** The cracked effluent can pass from outlet **262** to one or more transfer line exchangers **264** and thence to a recovery train via line **266.**

## Claims

1. An apparatus for cracking hydrocarbonaceous feed, which comprises a vapor/liquid separator and:
(I) a convection zone containing:
(a) a first tube bank comprising:
(i) an upper hydrocarbon feed inlet,
(ii) an optional lower hydrocarbon feed inlet,
(iii) one or more inlets for introducing water and steam, and
(iv) an outlet for a heated mixture stream;
(b) further comprising:
(i) a second tube bank positioned beneath said first tube bank comprising an economizer inlet for introducing high pressure boiler feed water and an economizer outlet for withdrawing boiler feed water of greater heat content; and
(ii) an optional third tube bank positioned beneath said first tube bank comprising an inlet for high pressure steam which is heated in a section of said third tube bank, an inlet for mixing desuperheater water with said high pressure steam to cool the high pressure steam, a section for reheating said high pressure steam, and an outlet for withdrawing superheated high pressure steam; and
(c) further comprising:
(i) a bypass line for receiving said heated mixture stream from said first tube bank and
(ii) a fourth tube bank positioned beneath said second tube bank and/or said third tube bank which comprises an inlet connected to said bypass tine and an outlet for directing effluent to said vapor/liquid separator; and
(d) a fifth tube bank positioned beneath said fourth tube bank with an inlet for receiving overhead from said vapor/liquid separator and an outlet; and
(II) a radiant zone beneath said convection zone which includes a plurality of burners producing flue gas passing upwards through the radiant zone and convection tube banks, which radiant zone receives effluent from said fifth tube bank and further comprises an outlet for removing cracked effluent.

2. The apparatus of claim 1, wherein said radiant zone includes a means for adjusting excess oxygen content of said flue gas.

3. The apparatus of claim 1 or 2, that further comprises a line which bypasses at least a portion of said fourth tube bank and whose effluent is directed to said vapor/liquid separator.

4. The apparatus of claim 1, 2, or 3, that further comprises a first transfer line exchanger for receiving cracked effluent from said radiant zone, said transfer line exchanger having an outlet for removing quenched effluent.

5. The apparatus of claim 4, that further comprises a second transfer line exchanger downstream from said first transfer line exchanger to provide additionally quenched effluent.

6. The apparatus of claim 4 or 5, that further comprises a recovery train downstream of said transfer line exchanger.

7. The apparatus of any preceding claim, wherein said one or more inlets for introducing water and steam are associated with a sparger.

8. A process for cracking hydrocarbonaceous feed that comprises:
(a) preheating said feed in a first tube bank of a convection zone of a furnace, said feed being introduced to said first tube bank through at least one of:
(i) an upper hydrocarbon feed inlet; and
(ii) a lower hydrocarbon feed inlet;
(b) mixing the hydrocarbon feedstock with water and steam added to the first tube bank via one or more inlets for introducing water and steam and removing said heated mixture stream through an outlet in said first tube bank, the water and steam being added to control the temperature of said heated mixture stream;
(c) further controlling said temperature of said heated mixture stream by:
(i) regulating the temperature of a second tube bank of said convection zone positioned beneath said first tube bank by introducing high pressure boiler feed water through an economizer inlet and withdrawing boiler feed water of greater heat content through an economizer outlet; and
(ii) optionally, regulating the temperature of a third tube bank of said convection zone positioned beneath said first tube bank by introducing high pressure steam through an inlet for high pressure steam, heating said high pressure steam, mixing desuperheater water with said high pressure steam to cool said high pressure steam, reheating said high pressure steam, and withdrawing superheated high pressure steam from said third tube bank through an outlet;
(d) directing said heated mixture stream by a bypass line substantially external to said convection zone for receiving said heated mixture stream from said first tube bank to a fourth tube bank positioned beneath said second tube bank and said third tube bank, which fourth tube bank comprises an inlet connected to said bypass line and an outlet for directing a partially liquid effluent to a vapor/liquid separator;
(e) flashing said effluent from said fourth tube bank effluent in said vapor/liquid separator external to said convection zone to provide a liquid bottoms phase and an overhead vapor phase;
(f) directing said overhead vapor phase to a fifth tube bank of said convection zone positioned beneath said fourth tube bank with an inlet for receiving overhead from said vapor/liquid separator and an outlet in order to further heat said overhead vapor phase;
(g) cracking said further heated overhead vapor phase in a radiant zone beneath said convection zone, said radiant zone including a plurality of burners producing flue gas passing upwards through the radiant zone and convection tube banks, to provide a cracked effluent; and
(h) withdrawing said cracked effluent from said radiant zone.

9. The process of claim 8, that further comprises adjusting excess oxygen content of said flue gas.

10. The process of claim 9, wherein said excess oxygen content is adjusted to at least about 4%.

11. The process of any of claims 8 through 10, that further comprises bypassing at least a portion of said fourth tube bank and directing effluent taken from an intermediate portion of said fourth tube bank to said vapor/liquid separator.

12. The process of any of claims 8 through 11, that further comprises quenching cracked effluent from said radiant zone in a first transfer line exchanger.

13. The process of claim 12, that further comprises quenching effluent taken from said first transfer line exchanger in a second transfer line exchanger.

14. The process of any of claims 8 through 13, that further comprises recovering olefins from said cracked effluent in a recovery train.

15. The process of any of claims 8 through 14, wherein (i) the hydrocarbonaceous feed is selected from condensate contaminated with resid, naphtha contaminated with resid, and kerosene contaminated with resid and (ii) said fourth tube bank effluent is directed to said vapor/liquid separator at temperatures less than about 315°C (600°F).

16. The process of claim 15, wherein said temperatures of said fourth tube bank effluent are less than about 290°C (550°F).

17. The process of any of claims 8 through 14, wherein (i) the hydrocarbonaceous feed containing resid is selected from the group consisting of crude oil and atmospheric resid and (ii) said effluent from said fourth tube bank effluent which is directed to said vapor/liquid separator is maintained at temperatures of at least about 400°C (750°F).

18. The process of claim 17, wherein said hydrocarbonaceous feed containing resid comprises atmospheric pipestill bottoms.

19. The process of claim 17 or 18, wherein said temperatures of said fourth tube bank effluent are at least about 460°C (860°F).

20. The process of claim 17 or 18, wherein said temperatures of said fourth tube bank effluent range from about 400 to about 540°C (750 to 1000°F).

21. The process of any of claims 8 through 20, wherein said feed is introduced to said first tube bank through said upper hydrocarbon feed inlet.

22. The process of any of claims 8 through 20, wherein said feed is introduced to said first tube bank through said lower hydrocarbon feed inlet.

23. The process of any of claims 8 through 20, wherein said feed is introduced to said first tube bank through both an upper hydrocarbon feed inlet and a lower hydrocarbon feed inlet.

24. The process of claim 8, wherein a feed that contains less than about 50 wt.% resid is introduced to said first tube bank through said upper hydrocarbon feed inlet.

25. The process of claims 21, wherein said feed is selected from the group consisting of crude oil, atmospheric resid, and condensate which contains at least about 2 ppm(w) resid.

26. The process of claim 23, wherein the feed is selected from the group consisting of crude oil and atmospheric resid.

27. The process of claim 22, wherein said feed contains at least about 2 ppm(w) resid.

28. The process of claim 27, wherein said feed comprises condensate that contains at least about 2 ppm(w) resid.

## Patentansprüche

1. Vorrichtung zum Cracken von kohlenwasserstoffhaltigem oder kohlenwasserstoffartigem Einsatzmaterial, die einen Dampf/Flüssig-Abscheider und
(I) eine Konvektionszone, die
(a) eine erste Röhrenbank, die
(i) einen oberen Einlass für Kohlenwasserstoffeinsatzmaterial,
(ii) einen optionalen unteren Einlass für Kohlenwasserstoffeinsatzmaterial,
(iii) einen oder mehrere Einlässe zur Einbringung von Wasser und Wasserdampf,
und (iv) einen Auslass für einen erwärmten Mischstrom umfasst,
(b) ferner
(i) eine zweite Röhrenbank, die unter der ersten Röhrenbank angeordnet ist und einen Vorwärmereinlass zur Einbringung von Hochdruck-Kesselspeisewasser und einen Vorwärmerauslass zum Abziehen von Kesselspeisewasser mit höherem Wärmegehalt umfasst, und
(ii) eine optionale dritte Röhrenbank umfasst, die unter der ersten Röhrenbank angeordnet ist und einen Einlass für Hochdruckwasserdampf, der in einem Abschnitt der dritten Röhrenbank erwärmt wird, einen Einlass zum Mischen von Enthitzerwasser mit dem Hochdruckwasserdampf, um den Hochdruckwasserdampf zu kühlen, einen Abschnitt zum Wiedererwärmen des Hochdruckwasserdampfes und einen Auslass zum Abziehen des überhitzten Hochdruckwasserdampfes umfasst, und
(c) ferner
(i) eine Umgehungsleitung zur Aufnahme des erwärmten Mischstroms aus der ersten Röhrenbank und
(ii) eine vierte Röhrenbank umfasst, die unter der zweiten Röhrenbank und/oder der dritten Röhrenbank angeordnet ist, welche einen mit der Umgehungsleitung verbundenen Einlass und einen Auslass zum Leiten des Ausflusses zu dem Dampf/Flüssig-Abscheider aufweist, und
(d) eine fünfte Röhrenbank enthält, die unter der vierten Röhrenbank angeordnet ist und einen Einlass zur Aufnahme von Kopfprodukt aus dem Dampf/Flüssig-Abscheider und einen Auslass aufweist, und
(II) eine Strahlungszone unterhalb der Konvektionszone umfasst, die mehrere Brenner einschließt, die Rauchgas erzeugen, das durch die Strahlungszone und die Konvektionsröhrenbänke aufwärts geleitet wird, wobei die Strahlungszone Ausfluss aus der fünften Röhrenbank erhält und ferner einen Auslass zur Entfernung von gecracktem Ausfluss umfasst.

2. Vorrichtung nach Anspruch 1, bei der die Strahlungszone ein Mittel zur Einstellung des Überschusssauerstoffgehalts des Rauchgases einschließt.

3. Vorrichtung nach Anspruch 1 oder 2, die ferner eine Leitung umfasst, die mindestens einen Teil der vierten Röhrenbank umgeht, und deren Ausfluss zu dem Dampf/Flüssig-Abscheider geleitet wird.

4. Vorrichtung nach Anspruch 1, 2 oder 3, die ferner einen ersten Überführungsleitungsaustauscher zur Aufnahme von gecracktem Ausfluss aus der Strahlungszone umfasst, wobei der Überführungsleitungsaustauscher einen Auslass zur Entfernung von gequenchtem Ausfluss aufweist.

5. Vorrichtung nach Anspruch 4, die ferner einen zweiten Überführungsleitungsaustauscher stromabwärts von dem ersten Überführungsleitungsaustauscher aufweist, um weiteren gequenchten Ausfluss zu liefern.

6. Vorrichtung nach Anspruch 4 oder 5, die ferner einen Rückgewinnungszug stromabwärts von dem Überführungsleitungsaustauscher umfasst.

7. Vorrichtung nach einem der vorhergehenden Ansprüche, bei der ein oder mehrere Einlässe zur Einbringung von Wasser und Wasserdampf mit einer Einblasvorrichtung assoziiert sind.

8. Verfahren zum Cracken von kohlenwasserstoffhaltigem oder kohlenwasserstoffartigem Einsatzmaterial, bei dem
(a) das Einsatzmaterial in einer ersten Röhrenbank einer Konvektionszone eines Ofens vorgeheizt wird, wobei das Einsatzmaterial in die erste Röhrenbank durch mindestens eines von
(i) einem oberen Einlass für Kohlenwasserstoffeinsatzmaterial und
(ii) einem unteren Einlass für Kohlenwasserstoffeinsatzmaterial eingebracht wird,
(b) das Kohlenwasserstoffeinsatzmaterial mit Wasser und Wasserdampf gemischt wird, die der ersten Röhrenbank durch einen oder mehrere Einlässe zur Einbringung von Wasser und Wasserdampf zugegeben werden, und der erwärmte Mischstrom durch einen Auslass in der ersten Röhrenbank entfernt wird, wobei das Wasser und der Wasserdampf zugegeben werden, um die Temperatur des erwärmten Mischstroms zu kontrollieren,
(c) die Temperatur des erwärmten Mischstroms ferner kontrolliert wird, indem
(i) die Temperatur einer zweiten Röhrenbank der Konvektionszone reguliert wird, die unter der ersten Röhrenbank angeordnet ist, indem Hochdruck-Kesselspeisewasser durch einen Vorwärmereinlass eingebracht wird und Kesselspeisewasser mit größerem Wärmegehalt durch einen Vorwärmerauslass abgezogen wird, und
(ii) die Temperatur einer dritten Röhrenbank der Konvektionszone, die unter der ersten Röhrenbank angeordnet ist, gegebenenfalls reguliert wird, indem Hochdruckwasserdampf durch einen Einlass für Hochdruckwasserdampf eingebracht wird, der Hochdruckwasserdampf erwärmt wird, Enthitzerwasser mit dem Hochdruckwasserdampf gemischt wird, um den Hochdruckwasserdampf zu kühlen, der Hochdruckwasserdampf wieder erwärmt wird und überhitzter Hochdruckwasserdampf über einen Auslass aus der dritten Röhrenbank abgezogen wird,
(d) der erwärmte Mischstrom über eine Umgehungsleitung, die sich im Wesentlichen außerhalb der Konvektionszone befindet und den erwärmten Mischstrom aus der ersten Röhrenbank aufnimmt, zu einer vierten Röhrenbank geleitet wird, die unter der zweiten Röhrenbank und der dritten Röhrenbank angeordnet ist, wobei die vierte Röhrenbank einen mit der Umgehungsleitung verbundenen Einlass und einen Auslass aufweist, um einen teilweise flüssigen Ausfluss zu einem Dampf/Flüssig-Abscheider zu leiten,
(e) der Ausfluss aus dem vierten Röhrenbankausfluss in dem Dampf/Flüssig-Abscheider außerhalb der Konvektionszone geflasht wird, um eine flüssige Sumpfproduktphase und eine Kopfprodukt-Dampfphase zu liefern,
(f) die Kopfprodukt-Dampfphase zu einer fünften Röhrenbank der Konvektionszone geleitet wird, die sich unter der vierten Röhrenbank befindet und einen Einlass zur Aufnahme von Kopfprodukt aus dem Dampf/Flüssig-Abscheider und einen Auslass aufweist, um die Kopfprodukt-Dampfphase weiter zu erwärmen,
(g) die weiter erwärmte Kopfprodukt-Dampfphase in einer Strahlungszone unter der Konvektionszone gecrackt wird, wobei die Strahlungszone mehrere Brenner einschließt, die Rauchgas erzeugen, welches durch die Strahlungszone und die Konvektionsröhrenbänke aufwärts geleitet wird, um einen gecrackten Ausfluss zu liefern, und
(h) der gecrackte Ausfluss aus der Strahlungszone abgezogen wird.

9. Verfahren nach Anspruch 8, bei dem ferner der Überschusssauerstoffgehalt des Rauchgases eingestellt wird.

10. Verfahren nach Anspruch 9, bei dem der Überschusssauerstoffgehalt auf mindestens etwa 4 % eingestellt wird.

11. Verfahren nach einem der Ansprüche 8 bis 10, bei dem ferner mindestens ein Teil der vierten Röhrenbank umgangen wird und Ausfluss, der einem mittleren Abschnitt der vierten Röhrenbank entnommen wurde, zu dem Dampf/Flüssig-Abscheider geleitet wird.

12. Verfahren nach einem der Ansprüche 8 bis 11, bei dem ferner gecrackter Ausfluss aus der Strahlungszone in einem ersten Überführungsleitungsaustauscher gequencht wird.

13. Verfahren nach Anspruch 12, bei dem ferner Ausfluss, der dem ersten Überführungsleitungsaustauscher entnommen wurde, in einem zweiten Überführungsleitungsaustauscher gequencht wird.

14. Verfahren nach einem der Ansprüche 8 bis 13, bei dem ferner in einem Rückgewinnungszug Olefine aus dem gecrackten Ausfluss gewonnen werden.

15. Verfahren nach einem der Ansprüche 8 bis 14, bei dem (i) das kohlenwasserstoffhaltige oder kohlenwasserstoffartige Einsatzmaterial ausgewählt ist aus mit Rückstand verunreinigtem Kondensat, mit Rückstand verunreinigtem Naphtha und mit Rückstand verunreinigtem Kerosin, und (ii) der Ausfluss der vierten Röhrenbank bei Temperaturen von weniger als etwa 315°C (600°F) zu dem Dampf/Flüssig-Abscheider geleitet wird.

16. Verfahren nach Anspruch 15, bei dem die Temperaturen des vierten Röhrenbankausflusses unter etwa 290°C (550°F) liegen.

17. Verfahren nach einem der Ansprüche 8 bis 14, bei dem (i) das rückstandshaltige kohlenwasserstoffhaltige oder kohlenwasserstoffartige Einsatzmaterial ausgewählt ist aus der Gruppe bestehend aus Rohöl und atmosphärischem Rückstand und (ii) der Ausfluss aus dem vierten Röhrenbankausfluss, welcher zu dem Dampf/Flüssig-Abscheider geleitet wird, auf Temperaturen von mindestens etwa 400°C (750°F) gehalten wird.

18. Verfahren nach Anspruch 17, bei dem das rückstandshaltige kohlenwasserstoffhaltige oder kohlenwasserstoffartige Einsatzmaterial atmosphärische Sumpfprodukte aus Rohrverdampfern umfasst.

19. Verfahren nach Anspruch 17 oder 18, bei dem die Temperaturen des vierten Röhrenbankausflusses mindestens etwa 460°C (860°F) betragen.

20. Verfahren nach Anspruch 17 oder 18, bei dem die Temperaturen des vierten Röhrenbankausflusses im Bereich von etwa 400 bis etwa 540°C (750 bis 1000°F) liegen.

21. Verfahren nach einem der Ansprüche 8 bis 20, bei dem das Einsatzmaterial durch den oberen Kohlenwasserstoffeinsatzmaterialeinlass in die erste Röhrenbank eingebracht wird.

22. Verfahren nach einem der Ansprüche 8 bis 20, bei dem das Einsatzmaterial durch den unteren Kohlenwasserstoffeinsatzmaterialeinlass in die erste Röhrenbank eingebracht wird.

23. Verfahren nach einem der Ansprüche 8 bis 20, bei dem das Einsatzmaterial sowohl durch den oberen Einlass für Kohlenwasserstoffeinsatzmaterial als auch durch den unteren Einlass für Kohlenwasserstoffeinsatzmaterial in die erste Röhrenbank eingebracht wird.

24. Verfahren nach Anspruch 8, bei dem ein Einsatzmaterial, das weniger als etwa 50 Gew.% Rückstand enthält, durch den oberen Einlass für Kohlenwasserstoffeinsatzmaterial in die erste Röhrenbank eingebracht wird.

25. Verfahren nach Anspruch 21, bei dem das Einsatzmaterial ausgewählt ist aus der Gruppe bestehend aus Rohöl, atmosphärischem Rückstand und-Kondensat, das mindestens etwa 2 Gew.-ppm Rückstand enthält.

26. Verfahren nach Anspruch 23, bei dem das Einsatzmaterial ausgewählt ist aus der Gruppe bestehend aus Rohöl und atmosphärischem Rückstand.

27. Verfahren nach Anspruch 22, bei dem das Einsatzmaterial mindestens etwa 2 Gew.-ppm Rückstand enthält.

28. Verfahren nach Anspruch 27, bei dem das Einsatzmaterial Kondensat umfasst, das mindestens etwa 2 Gew.-ppm Rückstand enthält.

## Revendications

1. Appareil pour le craquage d'une alimentation hydrocarbonée, comprenant un séparateur vapeur/liquide et :
(I) une zone de convexion contenant
(a) une première batterie de tubes comprenant :
(i) une entrée d'alimentation hydrocarbonée supérieure,
(ii) une entrée d'alimentation hydrocarbonée inférieure éventuelle,
(iii) une ou plusieurs entrées pour l'introduction d'eau et de vapeur, et
(iv) une sortie pour un courant de mélange chauffé ;
(b) comprenant en outre :
(i) une deuxième batterie de tubes positionnée en dessous de ladite première batterie de tubes, comprenant une entrée d'économiseur pour introduire de l'eau d'alimentation de bouilleur sous haute pression et une sortie d'économiseur pour soutirer de l'eau d'alimentation de bouilleur présentant une plus grande enthalpie ; et
(ii) une troisième batterie de tubes éventuelle positionnée en dessous de ladite première batterie de tubes, comprenant une entrée pour de la vapeur sous haute pression qui est chauffée dans une section de ladite troisième batterie de tubes, une entrée pour mélanger de l'eau de désurchauffeur avec ladite vapeur sous haute pression en vue de refroidir la vapeur sous haute pression, une section pour réchauffer ladite vapeur sous haute pression, et une sortie pour soutirer de la vapeur surchauffée sous haute pression ; et
(c) comprenant en outre :
(i) une conduite de dérivation recevant ledit courant de mélange chauffé à partir de ladite première batterie de tubes et
(ii) une quatrième batterie de tubes positionnée en dessous de ladite deuxième batterie de tubes et/ou de ladite troisième batterie de tubes, comprenant une entrée reliée à ladite conduite de dérivation et une sortie pour diriger l'effluent vers ledit séparateur vapeur/liquide ; et
(d) une cinquième batterie de tubes positionnée en dessous de ladite quatrième batterie de tubes, avec une entrée pour recevoir la tête à partir dudit séparateur vapeur/liquide et une sortie ; et
(II) une zone radiante en dessous de ladite zone de conversion, comprenant plusieurs brûleurs produisant du gaz de carneau passant vers le haut à travers la zone radiante et les batteries de tubes de convexion, laquelle zone radiante reçoit l'effluent à partir de ladite cinquième batterie de tubes et comprend en outre une sortie pour retirer l'effluent de craquage.

2. Appareil selon la revendication 1, dans lequel ladite zone radiante comprend un moyen pour ajuster la teneur en oxygène en excès dudit gaz de carneau.

3. Appareil selon la revendication 1 ou 2, qui comprend en outre une conduite qui dérive au moins une portion de ladite quatrième batterie de tubes et dont l'effluent est dirigé vers ledit séparateur vapeur/liquide.

4. Appareil selon la revendication 1, 2 ou 3, qui comprend en outre un premier échangeur de conduite de transfert pour recevoir l'effluent de craquage à partir de ladite zone radiante, ledit échangeur de conduite de transfert présentant une sortie pour retirer l'effluent refroidi rapidement.

5. Appareil selon la revendication 4, qui comprend en outre un deuxième échangeur de conduite de transfert en aval dudit premier échangeur de conduite de transfert pour procurer davantage d'effluent refroidi rapidement.

6. Appareil selon la revendication 4 ou 5, qui comprend en outre un train de récupération en aval dudit échangeur de conduite de transfert.

7. Appareil selon l'une quelconque des revendications précédentes, dans lequel lesdites une ou plusieurs entrées pour introduire de l'eau et de la vapeur sont associées à un arroseur.

8. Procédé de craquage d'une alimentation hydrocarbonée, comprenant les étapes consistant à :
(a) pré-chauffer ladite alimentation dans une première batterie de tubes d'une zone de convexion d'un fourneau, ladite alimentation étant introduite dans ladite première batterie de tubes à travers au moins l'une parmi :
(i) une entrée d'alimentation hydrocarbonée supérieure ; et
(ii) une entrée d'alimentation hydrocarbonée inférieure ;
(b) mélanger la charge d'alimentation hydrocarbonée avec de l'eau et de la vapeur ajoutées dans la première batterie de tubes par l'intermédiaire d'une ou de plusieurs entrées pour introduire de l'eau et de la vapeur et retirer ledit courant de mélange chauffé à travers une sortie dans ladite première batterie de tubes, l'eau et la vapeur étant ajoutées pour réguler la température dudit courant de mélange chauffé ;
(c) réguler davantage ladite température dudit courant de mélange chauffé :
(i) en régulant la température d'une deuxième batterie de tubes de ladite zone de convexion positionnée en dessous de ladite première batterie de tubes en introduisant de l'eau d'alimentation de bouilleur sous haute pression à travers une entrée d'économiseur et en soutirant de l'eau d'alimentation de bouilleur présentant une plus grande enthalpie à travers une sortie d'économiseur ; et
(ii) en régulant éventuellement la température d'une troisième batterie de tubes de ladite zone de convexion positionnée en dessous de ladite première batterie de tubes en introduisant de la vapeur sous haute pression à travers une entrée pour de la vapeur sous haute pression, en chauffant ladite vapeur sous haute pression, en mélangeant de l'eau de désurchauffeur avec ladite vapeur sous haute pression pour refroidir ladite vapeur sous haute pression, en réchauffant ladite vapeur sous haute pression et en soutirant de la vapeur surchauffée sous haute pression de ladite troisième batterie de tubes à travers une sortie ;
(d) diriger ledit courant de mélange chauffé par une conduite de dérivation substantiellement externe à ladite zone de convexion pour recevoir ledit courant de mélange chauffé à partir de ladite première batterie de tubes vers une quatrième batterie de tubes positionnée en dessous de ladite deuxième batterie de tubes et de ladite troisième batterie de tubes, laquelle quatrième batterie de tubes comprend une entrée reliée à ladite conduite de dérivation et une sortie pour diriger un effluent partiellement liquide vers un séparateur vapeur/liquide ;
(e) détendre ledit effluent à partir dudit effluent de la quatrième batterie de tubes dans ledit séparateur vapeur/liquide externe à ladite zone de convexion pour procurer une phase liquide de queue et une phase vapeur de tête ;
(f) diriger ladite phase vapeur de tête vers une cinquième batterie de tubes de ladite zone de convexion positionnée en dessous de ladite quatrième batterie de tubes avec une entrée pour recevoir la tête à partir dudit séparateur vapeur/liquide et une sortie afin de chauffer davantage ladite phase vapeur de tête ;
(g) craquer ladite phase vapeur de tête davantage chauffée dans une zone radiante en dessous de ladite zone de convexion, ladite zone radiante comprenant plusieurs brûleurs produisant du gaz de carneau passant vers le haut à travers la zone radiante et les batteries de tubes de convexion, pour procurer un effluent de craquage ; et
(h) soutirer ledit effluent de craquage de ladite zone radiante.

9. Procédé selon la revendication 8, comprenant en outre l'ajustement de la teneur en oxygène en excès dudit gaz de carneau.

10. Procédé selon la revendication 9, dans lequel ladite teneur en oxygène en excès est ajustée à au moins environ 4 %.

11. Procédé selon l'une quelconque des revendications 8 à 10, comprenant en outre les étapes consistant à dériver au moins une portion de ladite quatrième batterie de tubes et à diriger l'effluent prélevé d'une portion intermédiaire de ladite quatrième batterie de tubes vers ledit séparateur vapeur/liquide.

12. Procédé selon l'une quelconque des revendications 8 à 11, comprenant en outre le refroidissement rapide de l'effluent de craquage à partir de ladite zone radiante dans un premier échangeur de conduite de transfert.

13. Procédé selon la revendication 12, comprenant en outre le refroidissement rapide de l'effluent prélevé dudit premier échangeur de conduite de transfert dans un deuxième échangeur de conduite de transfert.

14. Procédé selon l'une quelconque des revendications 8 à 13, comprenant en outre la récupération d'oléfines à partir dudit effluent de craquage dans un train de récupération.

15. Procédé selon l'une quelconque des revendications 8 à 14, dans lequel (i) l'alimentation hydrocarbonée est choisie parmi un condensat contaminé par un résidu, du naphta contaminé par un résidu, et du kérosène contaminé par un résidu et (ii) ledit effluent de la quatrième batterie de tubes est dirigé vers ledit séparateur vapeur/liquide à des températures inférieures à environ 315°C (600°F).

16. Procédé selon la revendication 15, dans lequel lesdites températures dudit effluent de la quatrième batterie de tubes sont inférieures à environ 290°C (550°F).

17. Procédé selon l'une quelconque des revendications 8 à 14, dans lequel (i) l'alimentation hydrocarbonée contenant un résidu est choisie parmi le groupe constitué d'un pétrole brut et d'un résidu atmosphérique et (ii) ledit effluent provenant dudit effluent de la quatrième batterie de tubes qui est dirigé vers ledit séparateur vapeur/liquide est maintenu à des températures d'au moins environ 400°C (750°F).

18. Procédé selon la revendication 17, dans lequel ladite alimentation hydrocarbonée contenant un résidu comprend une queue de four tubulaire atmosphérique.

19. Procédé selon la revendication 17 ou 18, dans lequel lesdites températures dudit effluent de la quatrième batterie de tubes sont d'au moins environ 460°C (860°F).

20. Procédé selon la revendication 17 ou 18, dans lequel lesdites températures dudit effluent de la quatrième batterie de tubes s'échelonnent d'environ 400 à environ 540°C (750 à 1000°F).

21. Procédé selon l'une quelconque des revendications 8 à 20, dans lequel ladite alimentation est introduite dans ladite première batterie de tubes à travers ladite entrée d'alimentation hydrocarbonée supérieure.

22. Procédé selon l'une quelconque des revendications 8 à 20, dans lequel ladite alimentation est introduite dans ladite première batterie de tubes à travers ladite entrée d'alimentation hydrocarbonée inférieure.

23. Procédé selon l'une quelconque des revendications 8 à 20, dans lequel ladite alimentation est introduite dans ladite première batterie de tubes à travers à la fois une entrée d'alimentation hydrocarbonée supérieure et une entrée d'alimentation hydrocarbonée inférieure.

24. Procédé selon la revendication 8, dans lequel une alimentation qui contient moins d'environ 50 % en poids de résidu est introduite dans ladite première batterie de tubes à travers ladite entrée d'alimentation hydrocarbonée supérieure.

25. Procédé selon la revendication 21, dans lequel ladite alimentation est choisie parmi le groupe constitué d'un pétrole brut, d'un résidu atmosphérique et d'un condensat qui contient environ au moins 2 ppm (p) de résidu.

26. Procédé selon la revendication 23, dans lequel l'alimentation est choisie parmi le groupe constitué d'un pétrole brut et d'un résidu atmosphérique.

27. Procédé selon la revendication 22, dans lequel ladite alimentation contient au moins environ 2 ppm (p) de résidu.

28. Procédé selon la revendication 27, dans lequel ladite alimentation comprend un condensat qui contient au moins environ 2 ppm (p) de résidu.
